# DEMANDE DE BREVET EUROPEEN

(11) **EP 2 521 047 A1**
(43) Date de publication de la demande: **07.11.2012**
(21) Numéro de dépôt: 11305534.7
(22) Date de dépôt: 06.05.2011
(51) Int. Cl.: G06F 17/30, H04L 29/06, G06Q 10/00

(54) **Procédé et système de prédiction du type de recherche sur l'internet des objets**

(71) Demandeur: Alcatel Lucent, 75007 Paris (FR)
(72) Inventeur: Christophe, Benoit, 91620, NOZAY (FR); Verdot, Vincent, 91620, NOZAY (FR)
(74) Mandataire: Demulsant, Xavier

(57) **Abrégé**

Procédé de prédiction du type de recherche pour une requête de recherche sur l'Internet des objets comprenant une étape d'estimation, à l'aide de moyens de calcul, de la distribution du type de l'objet recherché.

## Description

La présente invention se rapporte au domaine technique de l'Internet des objets, et plus particulièrement à la recherche d'objets connectés dans des espaces intelligents.

On entend, ici, par « Internet des objets » diverses solutions techniques (technologies sans-fil, technologie Web, technologie informatique, TCP/IP, technologie d'identification électronique par exemple) permettant d'étendre l'Internet pour inclure les objets qui nous entourent. On parle alors de l'Internet des objets ou, en y transposant les standards du Web, du Web des objets.

L'Internet des objets, interconnectant des objets allant de simples objets identifiés par étiquettes électroniques à des objets dotés de systèmes informatiques actifs communicants, permet d'identifier ces objets, de capter, stocker, traiter et transférer des données s'y rattachant entre/dans des environnements physiques et virtuels. Ces environnements sont dits espaces intelligents.

Par « espace intelligent », on désigne ici un environnement comprenant une pluralité de capteurs, d'effecteurs, de moyens de communications fluides (l'informatique ubiquitaire/diffuse) et d'une intelligence embarquée (une intelligence ambiante) agencés pour assurer une gestion de l'information en fonction de contextes variés.

A titre d'exemple de ces environnements, on cite:
- un environnement professionnel (un bureau, une salle de réunion, un open-space, un département d'entreprise par exemple) comprenant une pluralité d'objets tels que des téléphones fixes/mobiles, des GPSs, des ordinateurs de bureau/portables, des imprimantes, des photocopieurs, des télécopieurs, des caméras, des écrans, des vidéoprojecteurs, des disques durs externes, des dossiers papier avec des étiquettes RFID par exemple;
- un environnement domestique (une chambre, une maison, un hôtel, une résidence par exemple) comprenant une pluralité d'objets tels que des systèmes domotiques (des alarmes, des interphones, des Smartphones, des ordinateurs, des systèmes de chauffages, des télécommandes, des téléviseurs, des récepteurs radio, des chaînes Hi-Fi, des électroménagers tels qu'un lave-linge, un congélateur, une plaque électrique), des produits manufacturés (une lampe, un yaourt, une bouteille, ou une chaise étiquetés par exemple);
- un environnement médical, industriel, de transport, ou commercial par exemple tels qu'un aéroport, une gare, un centre commercial, une rue commerciale, un centre sportif, différents bâtiments d'une entreprise.

Portée par des progrès technologiques permanents (communications sans-fil en réseau, développement de la mobilité, Informatique ubiquitaire, diversification des systèmes d'identification et d'accès) et un changement profond de la société (environnements sociotechniques autonomes centrés sur l'individu, réseaux personnels ou PAN pour Personal Area Network), l'Internet des objets ne cessent d'intégrer de plus en plus d'objets du quotidien. Le document *("*More than 50 Billion connected devices", Ericsson white paper, 284 23-3149 Uen, February 2011*),* estime que dans un futur proche plus de 50 milliards objets connectés seront couverts par l'Internet des objets.

Dès lors, le problème qui se pose est comment accélérer/améliorer la recherche d'un objet particulier parmi un très grand nombre d'objets connectés. En effet, face à cette masse grandissante d'objets connectés, les moteurs de recherche conventionnels de l'Internet des objets rencontrent beaucoup de difficultés à retrouver le compromis précision-rapidité adéquat pour effectuer une recherche.

Pour répondre à une requête de recherche sur l'Internet des objets, un algorithme parcourant un graphe des descriptions des objets connectés, ou une méthode basée sur une technique d'apprentissage automatique peuvent être adoptés pour retourner des résultats au dessus d'un certain seuil.

Cependant, ces méthodes de recherche ne peuvent être mise en oeuvre que lorsqu'un contexte de recherche est explicitement indiqué dans la requête de recherche. Un contexte de recherche n'étant pas nécessairement connu a priori, il est donc généralement difficile d'identifier le type de recherche adéquat : une recherche privilégiant la rapidité ou la précision?

Un objet de la présente invention est de proposer un framework permettant de prédire un contexte de recherche sur l'Internet des objets.

Un autre objet de la présente invention est de prédire le type d'une recherche (précise/floue) à effectuer en réponse à une requête de recherche sur l'Internet des objets.

Un autre objet de la présente invention est d'améliorer la résolution des requêtes de recherche sur l'Internet des objets.

Un autre objet de la présente invention est de réduire la latence des moteurs de recherche en prédisant un contexte de recherche.

Un objet de la présence invention est d'apporter une amélioration substantielle à la recherche (rapidité/précision) sur l'Internet des objets.

Un autre objet de la présente invention est d'améliorer les résultats de recherche dans un système d'information très largement distribué et ouvert tel que l'Internet des objets.

A cette fin, l'invention se rapporte, selon un premier aspect, à un procédé de prédiction du type de recherche pour une requête de recherche sur l'Internet des objets comprenant une étape d'estimation, à l'aide de moyen de calcul, de la distribution du type de l'objet recherché.

Ce procédé comprend en outre une étape de calcul des probabilités des types de recherche à partir des types de recherche des requêtes de recherche antérieures ayant un même identifiant que la requête de recherche.

Ce procédé comprend en outre une étape de pondération des probabilités calculées par des poids en fonction des distributions estimées (c'est-à-dire, en fonction de l'organisation d'un espace intelligent : grand nombre d'objets connectés, types variés par exemple).

L'invention se rapporte, selon un deuxième aspect, à un système de prédiction du type de recherche dans un espace intelligent comprenant des moyens agencés pour étudier la distribution des types des objets connectés présents dans l'espace intelligent.

Ce système comprend en outre un analyseur de contexte agencé pour extraire, depuis une requête de recherche, un identifiant de requête et le type d'objet recherché.

L'invention propose, selon un troisième aspect, un produit programme d'ordinateur implémenté sur un support mémoire, susceptible d'être mis en oeuvre au sein d'une unité de traitement informatique et comprenant des instructions pour la mise en oeuvre du procédé résumé ci-dessus.

D'autres caractéristiques et avantages de l'invention apparaîtront plus clairement et de manière concrète à la lecture de la description ci-après de modes de réalisation préférés, laquelle est faite en référence à
- la figure 1 qui illustre schématiquement le contexte d'application d'un mode de réalisation ; et
- la figure 2 qui illustre schématiquement une représentation fonctionnelle non limitative d'un mode de réalisation.

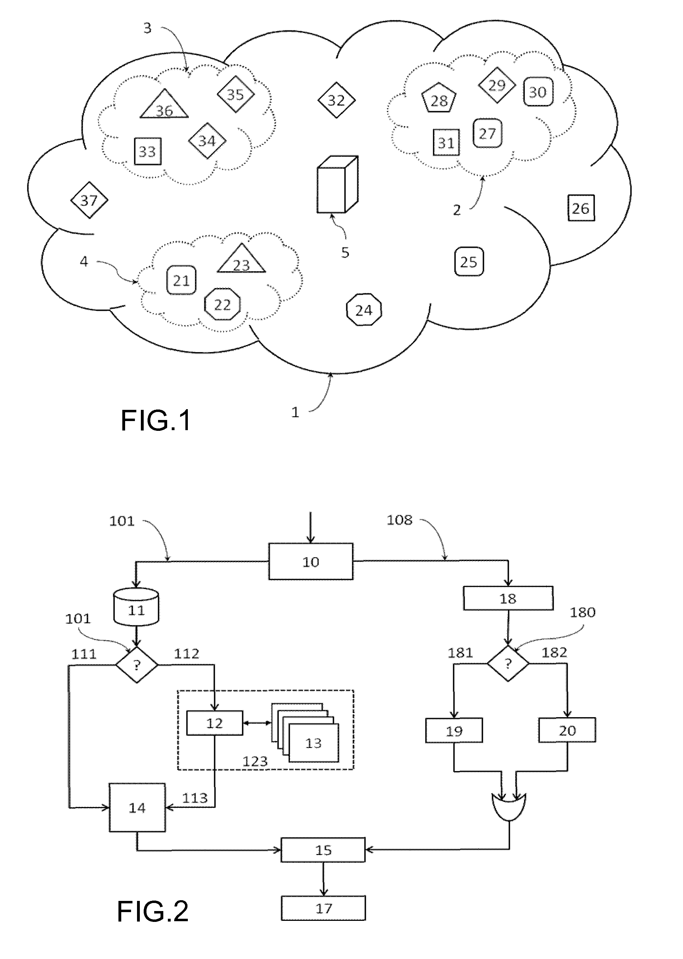

Sur la figure 1 est affiché un espace intelligent **1** couvrant une pluralité d'objets connectés **21-37** compris dans l'Internet des objets. L'espace intelligent **1** résulte généralement de la coopération et de l'interconnexion d'une pluralité de sous-espaces intelligents **2-4** et/ou d'objets connectés **24-26, 32,37.**

Un système **5** distribué de traitement de l'information (comprenant des ONS (Object Naming Service), des réseaux de communications ubiquitaires, des moyens informatiques logicielles/matérielles, des capteurs programmés par exemple) déployé d'une manière coopérative dans l'espace intelligent **1** est agencé pour supporter l'Internet des objets dans cet espace. Il permet en effet à un utilisateur, via une interface Web, d'interagir (vérifier la présence, consulter des informations ou utiliser une fonctionnalité d'un objet connecté par exemple) avec les objets connectés **21-37.** Il peut s'agir par exemple
- d'éteindre à distance une lampe équipée d'un système d'identification électronique (une étiquette RFID ou un puce sans contact par exemple);
- de lancer l'enregistrement d'un film passant sur une chaine de télévision ;
- de vérifier la présence d'un objet connecté quelconque dans un entrepôt ;
- de récupérer des informations (transit de la marchandise, date de fin de validité, origine par exemple) d'un produit connecté quelconque.

Notamment, le système 5 distribué de traitement de l'information comprend des moyens de recherche (un ou plusieurs moteur(s) de recherche) configurés pour effectuer une recherche sur l'Internet des objets en réponse à une requête de recherche.

De préférence, les sous-espaces intelligents **2-6** sont pourvus, respectivement, d'un moteur de recherche local, ces moteurs de recherche locaux étant fédérés par un moteur de recherche global.

Une recherche sur l'Internet des objets peut être ainsi obtenue via la mise en oeuvre de solutions distribuées permettant de supporter la prise en charge d'un grand nombre de requêtes de recherche.

Une requête de recherche peut être initiée par un utilisateur ou une application depuis l'espace ou un sous-espace intelligent, via un objet connecté **21-37** (un ordinateur, un Smartphone, un PDA par exemple).

A la réception par un moteur de recherche local d'une requête de recherche depuis un utilisateur ou une application, un système de prédiction du type de recherche se charge d'établir un contexte de recherche avant d'effectuer cette recherche.

On entend par « contexte de recherche » le type ou le mode de recherche à effectuer. On en distingue principalement
- une recherche floue basée sur les termes de la requête ou des variations de ceux-ci (en utilisant par exemple une distance d'édition comme la distance de Jaccard pour définir le concept de proximité) ;
- une recherche précise basée sur une syntaxe précise de requête.

La figure 2 illustre les différentes étapes permettant de prédire un contexte de recherche pour chaque requête de recherche reçue par le système de prédiction du type de recherche. Il est à noter que ces étapes visent à définir un contexte de recherche et non pas la recherche elle-même qui est à la charge d'un moteur de recherche.

Pour cela, le système de prédiction du type de recherche comprend un analyseur **10** de contexte.

Dès sa réception, une requête de recherche est analysée par un analyseur **10** de contexte pour en extraite
- au moins un identifient (requête_ID) (flèche **101** sur la figure 2). Cet identifiant peut être une adresse IP, un login, un identifiant de cookie, ou tout autre donnée permettant de plus ou moins distinguer d'une manière unique l'initiateur de la requête ;
- le type de l'objet recherché par cette requête (flèche **108** sur la figure 2).

Le système de prédiction du type de recherche vérifie si cet identifiant requête_ID possède un profil de recherche auprès d'une base de données interne **11.** Autrement dit, le système de prédiction du type de recherche cherche si l'initiateur de la requête reçu possède un historique de requêtes auprès de la base de données interne **11.**

A cet égard, le système de prédiction du type de recherche utilise l'identifiant requête_ID pour récupérer depuis la base de données interne **11** les types des recherches antérieures correspondant à cet identifient. Il est à noter, ici, que les types des recherches antérieures qui sont récupérés, et non pas la totalité de l'historique requête/réponse associé à l'identifiant de la requête « requéte_ID». Ces données sont récupérées pour effectuer des statistiques sur les types de recherche antérieurs (c'est-à-dire, réalisés en réponse à des requêtes de recherche antérieures lancées par l'initiateur de la requête reçue), et en calculer les probabilités des types de recherche pour la requête reçue.

Un test **101** est effectué sur l'historique correspondant à l'identifiant requête_ID retrouvé dans la base de données interne **11** pour vérifier s'il est vide ou on.

Si cette historique est vide (flèche **112** sur la figure 2), alors le système de prédiction interroge un module de découverte global **123.** Ce module **123** comprend un analyseur de contexte global **12** qui est connecté à une pluralité d'analyseurs de contexte locaux **13.**

De préférence, l'analyseur de contexte global **12** interroge un analyseur de contexte local **13** d'un sous-espace intelligent spatialement proche de l'analyseur de contexte **10** qui a reçu la requête de recherche. Autrement dit, s'il n'y a aucun historique local à l'analyseur de contexte **10,** le système de prédiction utilise les sous-espaces intelligents se trouvant au voisinage de l'initiateur de la requête.

Un sous-espace intelligent au voisinage de l'initiateur d'une requête de recherche peut être trouvé à l'aide d'informations extraites depuis la requête de recherche reçue (une adresse IP ou des coordonnées GPS par exemple).

Avantageusement, les sous-espaces intelligents proches entre eux comprennent généralement des objets connectés similaires (des clusters d'objets) constituant une sorte de différents « centres d'intérêts » pour l'initiateur d'une requête.

L'historique non vide récupéré depuis la base de données interne **11** (flèche **111** sur la figure 2) ou via le module de découverte global **123** (flèche **113** sur la figure 2) et correspondant à l'identifiant requête_ID est classé (étape **14** sur la figure 2) dans un tableau affichant des statistiques (nombre total, nombre de recherche par type) des types de recherche antérieurs ainsi que leurs probabilités respectives. A titre d'exemple, ce tableau peut comprendre les données suivantes:
Total des recherches : 50
Recherches floues : 45
Recherches précises : 5
Probabilité(recherches floues) : 0.9
Probabilité(recherches précises) : 0.1

Par ailleurs, le système **52** de prédiction de type de recherche détermine la distribution du type de l'objet recherché. Une approche sémantique peut être notamment adoptée pour identifier le type d'objet requis (flèche **108** sur la figure 2) dans une requête de recherche. On entend par distribution l'organisation d'un espace intelligent en objets connectés: un grand nombre d'objets connectés, types variés d'objets connectés par exemple.

Pour cela, un analyseur **18** d'objets connectés permet d'étudier (apporter des informations sur) la distribution des types des objets connectés présents dans l'espace intelligent 1, telles que par exemple :
- l'espace intelligent **1** est composé d'une pluralité d'objets connectés de types différents ou du même type (une pluralité de lampes, une pluralité de téléphones, par exemple);
- les objets connectés peuvent être repartis en en peu de clusters ;
- les types des objets connectés sont très hétérogènes;

L'analyseur **18** des objets connectés vise à avoir une vue générale sur les objets connectés se trouvant dans l'espace intelligent **1,** en termes de « distribution ».

Le test **180** de la distribution des types des objets connectés permet d'estimer (approcher), à l'aide de moyens de calcul, la distribution du type de l'objet recherché par une distribution théorique. A titre d'exemples, cette distribution peut être
- une distribution gaussienne **182** (c'est-à-dire peu de clusters d'objets connectés) qui favorise (accorde un poids important à) une recherche de type précis qu'une recherche de type flou (étape **20** sur la figure 2) ;
- une distribution stochastique **181** (c'est-à-dire, un grand nombre d'objets connectés) qui favorise (accorde un poids important à) une recherche de type flou qu'une recherche précise (étape **19** de la figure 2).

Les poids accordés aux types de recherche (étapes **19** et **20)** en fonction des distributions du type de l'objet recherché dans l'Internet des objets sont utilisés pour affiner (étape **15** de la figure 2) les probabilités des types de recherches calculées à l'étape **14.**

A titre d'exemple, dans l'étape **17,** les probabilités des types de recherches calculés à l'étape **14** sont pondérées par les coefficients (poids) accordés aux types de recherche en fonction de la distribution du type de l'objet recherché :
- probabilité(une recherche de type flou)= 0.9*poids(flou)
- probabilité(une recherche de type précis)=0.1*poids(précis)

Le système de prédiction calcule ainsi un score global (étape **17** sur la figure 2) qui donne une indication sur le type de recherche à effectuer en réponse à la requête de recherche reçue.

Un contexte du type de recherche est obtenu à l'aide:
- des probabilités des types de recherche déduites des types de recherche antérieurs lancés par l'initiateur de la requête de recherche reçue, les types de recherche antérieurs étant récupérés de l'historique des requêtes des recherche récupéré à l'aide d'un identifiant extrait de la requête de recherche reçue; et
- la distribution du type de l'objet requis dans la requête de la recherche parmi les objets connectés.

Le système de prédiction du type de recherche pondère les probabilités des types de recherche, déduite de l'historique de recherche, à l'aide des distributions des objets connectés se trouvant dans l'espace intelligent. Ceci permet de pondérer l'historique de recherche avec plus ou moins d'importance, en fonction de la distribution des objets, pour des algorithmes de recherche de type « précis » ou « flou ».

Ceci permet, notamment, de déterminer si un algorithme de recherche de type précis ou une méthode statistique (recherche de type flou, menant à un résultat moins précis mais plus rapide) est à utiliser pour répondre à la requête de recherche.

Concernant la distribution des objets, quatre cas peuvent être identifiés:
- la cardinalité des objets (c.à.d. le nombre des objets connectés dans l'espace intelligent 1) est faible. Par conséquent, une recherche précise peut être prioritaire (une recherche parmi un faible nombre d'objets est certainement rapide) ;
- la cardinalité des objets est élevée, alors pour accélérer la recherche, une approche statistique peut être adoptée ;
- la distribution des objets a la forme d'une gaussienne : quelques objets connectés sont de la même catégorie d'objets (c.à.d. un espace intelligent comprenant une pluralité de lampes, une pluralité de téléphones, par exemple). Une recherche précise peut être adoptée dans ce cas afin de mieux distinguer des objets de même catégorie ;
- la distribution des objets connectés est stochastique : les objets sont de types très variés. Dans ce cas, une recherche de type flou peut être adoptée, la probabilité de discrimination entre des objets du même type étant ainsi faible.

Avantageusement, la requête de recherche ne comprend pas de paramètres de contexte de recherche, notamment des seuils.

La prédiction du type de recherche à effectuer dans la recherche d'objets connectés dans une Internet des objets, conformément à la méthode décrite ci-dessus, présente un certain nombre d'avantages. Elle permet, en effet,
- d'adapter les résultats de recherche à un contexte donné ;
- de garantir le meilleure compromis entre la précision et la rapidité de la recherche sur l'Internet des objets ;
- de prendre en compte dans le type de recherche à effectuer la distribution des objets connectés.

## Revendications

1. Procédé de prédiction du type de recherche pour une requête de recherche sur l'Internet des objets comprenant une étape d'estimation, à l'aide de moyens de calcul, de la distribution du type de l'objet recherché.

2. Procédé selon la revendication 1 **caractérisé en ce qu'**il comprend, en outre, une étape de calcul des probabilités des types de recherche à partir des types de recherche des requêtes de recherche antérieures ayant un même identifiant que ladite requête de recherche.

3. Procédé selon la revendication 2 **caractérisé en ce qu'**il comprend, en outre, une étape de pondération desdites probabilités par des poids en fonction desdites distributions.

4. Procédé selon l'une quelconque des revendications 2 ou 3 **caractérisé en ce que** lesdits types de recherche des requêtes antérieures sont récupérés depuis une base de données interne (11).

5. Procédé selon l'une quelconque des revendications 2 ou 3 **caractérisé en ce que** lesdits types de recherche des requêtes antérieures sont récupérés depuis un sous-espace intelligent au voisinage de l'initiateur de ladite requête de recherche.

6. Système de prédiction du type de recherche dans un espace intelligent (1) comprenant des moyens agencés pour estimer la distribution des types d'objets connectés présents dans ledit espace intelligent (1).

7. Système selon la revendication 6 **caractérisé en ce qu'**il comprend, en outre, un analyseur (10) de contexte agencé pour extraire, depuis une requête de recherche, un identifiant de requête et le type d'objet recherché.

8. Système selon la revendication 7 **caractérisé en ce qu'**il comprend, en outre, des moyens pour calculer des probabilités des types de recherche à partir des types de recherche des requêtes de recherche antérieures ayant un même identifiant que ladite requête de recherche.

9. Système selon la revendication 8 **caractérisé en ce qu'**il comprend, en outre, des moyens de pondération desdites probabilités par des poids en fonction desdites distributions.

10. Produit programme d'ordinateur implémenté sur un support mémoire, susceptible d'être mis en oeuvre au sein d'une unité de traitement informatique et comprenant des instructions pour la mise en oeuvre d'un procédé selon l'une des revendications 1 à 5.
